# EUROPEAN PATENT APPLICATION

(11) **EP 2 735 863 A1**
(43) Date of publication of application: **28.05.2014**
(21) Application number: 13169570.2
(22) Date of filing: 28.05.2013
(51) Int. Cl.: G01N 21/84

(54) **System for the analysis of quick tests with a computer device like a smartphone or a tablet**

(30) Priority: 23.11.2012 IT MI20121995
(71) Applicant: Silmarc Pharma S.R.L, 55060 Guamo (LU) (IT)
(72) Inventor: Casolaro, Silverio, 55060 Guamo (LU) (IT)
(74) Representative: Banfi, Paolo

(57) **Abstract**

A system to analyze (10) quick-test results (S, MS), more specifically the results of diagnostic tests for the screening of drugs and alcohol use or abuse by the tested subject, wherein the system (10) includes a special, dedicated support (20), on which it is possible to place and lean (f1) a computer device (SP), such a Smartphone or a Tablet; wherein the rapid diagnostic test (S, MS), once it has been carried out, is inserted (f2) in a special housing, which is removable (f3), included in the support (20) and equipped with an internal lighting, so that the lighting conditions of the diagnostic test (S, MS) are independent from external conditions; wherein the computer device (SP), i.e. the Smartphone or the Tablet, is leant (f1) on an upper panel of the support (20) and then activated to take a photograph of the diagnostic test (S, MS), placed in the housing; and wherein said photograph is analyzed by a specific, dedicated software (APP), implemented into the computer device (SP).

## Description

### Field of the invention

The present invention relates, in general, to the field of the analysis of quick diagnostic tests on biological fluids and more specifically it relates to a system for the analysis or screening, by means of the use of a computer device, such as a Smartphone or a Tablet, or any similar device, of the results of the diagnostic test, which are carried out to detect a possible abuse of drugs or alcohol by the tested subjects.

The present invention relates also to a special support, dedicated, suitable for use in combination with a computer device, such a Smartphone or a Tablet, in the framework of the above system for the analysis of the rapid diagnostic tests, as well as to a specific program or software downloadable on a computer device to control the operation of said system of analysis.

The present invention is conveniently used both in the field of Occupational Medicine, and by Addiction Recovery Centers, such as the so-called SerT and other Communities, and also by law enforcement and police in order to test if the drivers are under the influence of substances of abuse.

### Background of the invention and state of the art

Diagnostic tests or screening tests are qualitative tests to detect drugs or alcohol abuse, and they are widely used with increasing demand.

If at first such tests were used mainly by Addiction Recovery Centers, to follow a detoxing therapies of addicted subjects, nowadays they are used also by law enforcement, for example to test drivers, and besides they are used in the field of Occupational Medicine.

For example, screening tests for drugs of abuse are compulsory for those categories of workers with duties which entail particular risks for the security, safety and health of third parties, in application of the State/Regions Agreement of 2007.

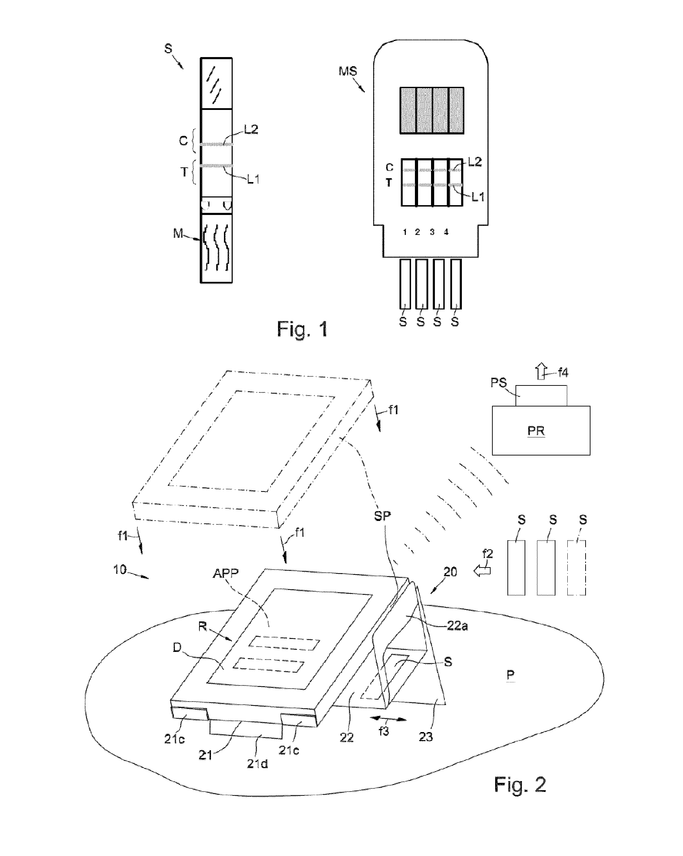

In Fig.1 there are schematically represented examples of such diagnostic tests, for a clearer and better understanding of the invention.

As it can be seen in Fig.1, tests can be available in different formats and packages, and they can be single strips, indicated with an "S", or assembled in multiscreen cassettes, indicated with "MS", containing more than one strip "S".

More in detail, such tests, used to ascertain the presence of drugs of abuse, are based on lateral flow immunochemistry and they are carried out dipping an extremity of the strip in the sample of the biological fluid, such as blood or urine, so that the biological fluid starts to migrate by capillary action along a porous membrane M, constituting the strip of such test, on which the reagents have been coated.

Such tests are designed to give a qualitative result, so that there is a cutoff concentration, i.e. a fixed concentration of the analyte or substance to be detected, below which the test result will be negative, even if the concentration of the analyte is not zero, and above which the test result will be positive.

Usually such tests are based on competitive binding and they can be visually read, so that there is a test window, in which the presence of a colored line L1 on the test zone T on the strip of the test indicates a negative result, while the absence of a colored line in such test zone T indicates a positive result.

Moreover in such tests there is always present an internal control, consisting in the formation of another colored line L2 in the control zone C of the strip of the test, where the presence of such colored line L2 confirms the correct procedure and performance of the test.

Reading the presence or absence of the colored lines, once the test has been carried out, is anyway subjected to the personal interpretation of the operator, so that, especially in the cases in which the coloration of the lines is weak and less intense, errors can be made in the evaluation of the test results.

There also cases in which specific regulations require an objective analysis of the results of such screening tests, instead of a personal interpretation, and moreover a proof of printing of the test results.

For this purpose, until now digital readers or scanners have been used, but they are limited to the reading and the detection of the image of the tests, without giving any automatic interpretation of such results.

Automatic instruments and devices to analyze rapid diagnostic tests have been developed and utilized in other fields with different applications.

For example there are devices to measure glycemia or tests for pregnancy, or more sophisticated instruments for quantitative measurements, such as those for clinical chemistry.

Moreover, the instruments and devices already available on the market for the analysis of diagnostic tests fail to meet an important requirement in most cases and applications in which they are used, that is the actual portability of the instrument, which aside from having the characteristics above described, must also be light, not bulky and of practical use for the operator, besides giving the possibility of printing the results of the tests.

### Summary of the invention

Therefore object of the present invention is to provide an improved system and device able to overcome the above-mentioned problems encountered in the analysis of the results of rapid diagnostic tests.

Another object of the present invention is to provide new instruments and devices capable of giving a correct and objective reading of the results of such rapid diagnostic test, and which moreover are of practical operation and quick use.

These objects are achieved by a system for the analysis of rapid diagnostic test, which includes the use of a computer device such as a Smartphone or a Tablet, having the characteristics defined by the main independent claim 1.

Other specific and advantageous embodiments of the invention are defined by the independent and dependent claims.

### Brief description of the drawings

This and other objects, characteristics and advantages of the present invention will appear clear and evident by the following description of one of its preferred embodiment, given as a not limiting example, with referral to the following drawings, in which:
Fig.1 shows schematically a typical diagnostic test, in strip and multiscreen format, which is read and analyzed in the context of the system of analysis of the present invention;
Fig.2 is a schematic view of a system, according to the present invention, for the analysis with a computer device, specifically a Smartphone or a Tablet, of the results of rapid diagnostic tests, more specifically of rapid tests used to detect an abuse of toxic substances, such as drugs or alcohol;
Fig.3 is a frontal prospect view of a support according to the present invention and included in the system of Fig.2, to be used for the analysis with a computer device, such as specifically a Smartphone or a Tablet, of the results of rapid diagnostic tests;
Fig.4 is a prospect view of a housing, suitable to house the diagnostic test which has been carried out, included in the support of Fig.3;
Fig.5 is a prospect view of the support of Fig.3 with the respective housing of Fig.4 in an open configuration so as to allow the insertion of the diagnostic test;
Fig.6 is a prospect view of the support in Fig.3 with respective housing of Fig.4 in a closed configuration after inserting the diagnostic test;
Fig.7 is a prospect view of the support in Fig.3 in a partially closed configuration, with the rear fin of the support partially folded on the upper panel of such support;
Fig.8 is a prospect view of the support in Fig.3 in a completely closed configuration, with the upper part completely folded on the upper panel of the support;
Fig. 8A is a view in enlarged scale of a hinging zone of the rear fin on the upper panel of the support in Fig.3 and
Fig.9 is a flow chart that shows a downloadable program for the computer device, i.e. the Smartphone or the Tablet, which is utilized in the system of the invention in Fig.2 and in particular is leant on the support in Fig.3 in order to analyze the results of the rapid diagnostic tests.

### Detailed description of a preferred embodiment of the invention

A first aspect of the invention relates to a broader system, overall indicated with 10 in Fig.2, for the analysis of the results of quick diagnostic tests, as those schematically shown in Fig.1, in strip format S or in multiscreen cassette configuration M, containing more strips S, which tests are carried out on biological fluids, usually blood and urine, in order to detect an abuse of drugs or alcohol by the tested subjects.

As already explained, such diagnostic tests S and MS, used and analyzed in the field of the present invention, are based on in vitro lateral flow immunochemistry, in strip format with a test zone T, on which a first colored line L1 is present or not according to the test result, and a control zone C, on which a second colored line L2 is present as a control of the proper performance of the test.

For instance the system of analysis 10 finds an advantageous application in the field of Occupational Medicine, and more specifically in the procedures for healthcare checks of drug addiction or of taking of psychotropic drugs by workers.

The present invention can also be used by public health structures or by law enforcement, to test drivers.

According to an essential characteristic of the present invention, the analysis system 10 for the results of rapid diagnostic tests is based on the use of a computer device, indicated with SP, that is the Smartphone or the Tablet, or similar device, and comprises:
- a dedicated support, generally indicated with 20, on which it is possible to place and lean the computer device SP, that is the Smartphone or the Tablet; and
- a dedicated program or software, indicated as APP and also identified by such name, as are usually named many applications and functions which are nowadays downloadable on such computer devices, which is implemented in the specific computer device SP, that is the Smartphone or the Tablet, intended to be leant on and to cooperate with the support 20.

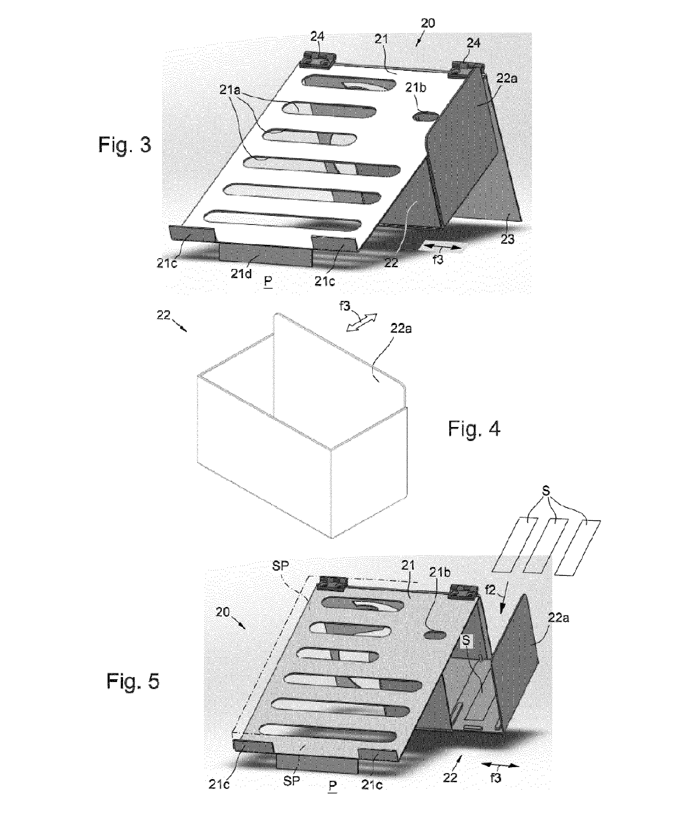

The dedicated support 20, usable in combination with the computer device SP, being an essential part of the system of analysis 10 of this invention, as well as an important aspect of the same invention, will now be described in detail, with reference to Figs. 3-8.

The support 20, which is preferably manufactured in metallic material, is designed to be placed and leant on a supporting top plane P and it includes an upper part formed by a panel 21, on which it is possible to lean the computer device SP, that is the Smartphone or the Tablet, as indicated by the arrows f1 in Fig.2, and a lower part, formed by a housing 22, in which it is possible to insert the diagnostic or screening test S or MS, once it has been carried out, as indicated by the arrow f2, still in Fig.2.

Preferably the upper panel 21 offers a plurality of openings 21a, having the scope of lightening the support 20.

This configuration, with openings, of the upper panel 21, has also the important advantage of allowing to see the interior of the housing 22, in order to take the photograph of the test, as described below.

The upper panel 21, fit to allow the computer device SP to lean on the support 20, is suitably designed to offer an opening 21b in connection with the camera lens which is incorporated in the same computer device SP, i.e. the Smartphone or the Tablet, so as to allow the camera to take, through such opening 21b, a photograph of the diagnostic test already carried out, placed in the housing 22, as it is described better below.

The upper panel 21 is also provided, along one edge, with two catches 21c, in form of fins, which are adjustable so as to allow the position of the computer device SP to be adapted when it is leant on the same panel 21, respectively to the position of the diagnostic test S, MS, arranged inside the housing 22, thereby obtaining the optimum framing of such test with the internal camera of the computer device SP.

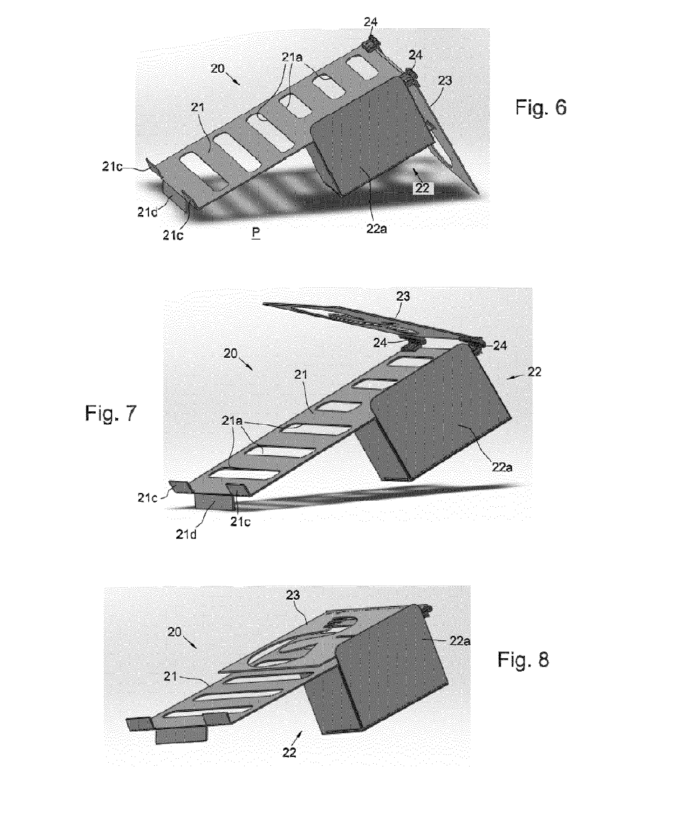

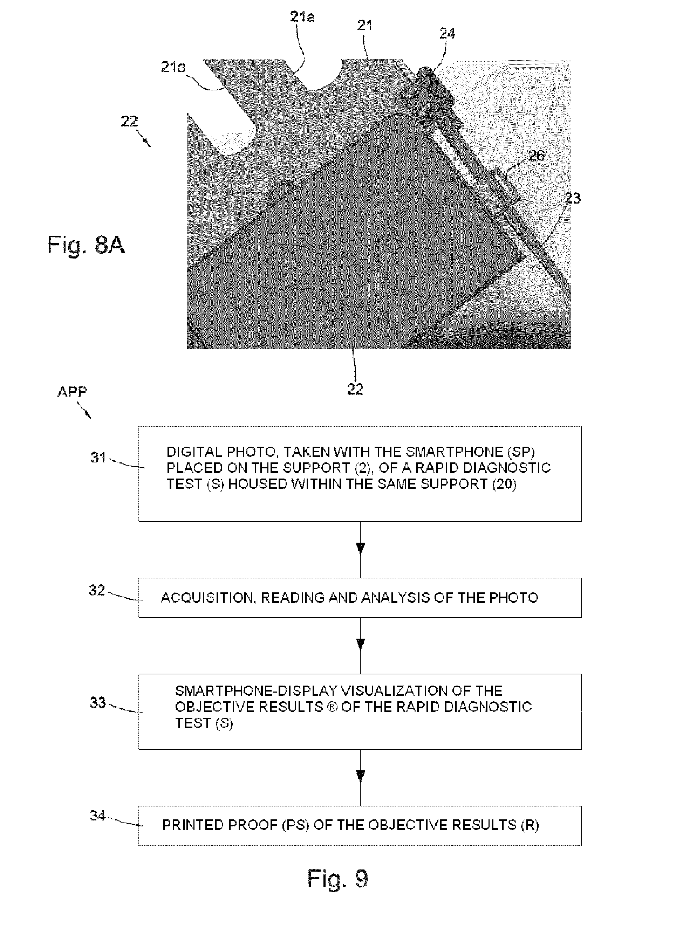

The support 20 is also partially refolding, and for such purpose it includes a rear part 23, in the form of a fin, which is connected by two hinges to an edge of the panel 21, opposite to the one having the fin catches 21c, in which such rear fin 23 can rotate until it is positioned and folded completely on the upper panel 21, as shown in Figs 7 and 8.

In such way it is possible to decrease the hindrance of the support 20 when it is necessary to transport it.

A further fin 21d is formed, between the two catches 21c, along the edge of the panel 21, opposite to the hinging edge with the foldable rear fin 23.

As shown in the figures, such fin 21d, shaped by the folding of the plate of the upper panel 21, helps, together with the rear fin 23, to define the leaning of the support 20 on the top plane P.

The housing 22 consists in turn of a box, stiffly fixed to the panel 21, as shown in Fig.4, which includes a part or surface 22a, placed along a side of the housing 22, wherein such surface 22a is extractable and it can be moved in both directions, as indicated by a double arrow f3, so as to open from one side the housing 22, so as to allow insertion therein of the diagnostic test, as indicated by an arrow f2, and subsequently to close the housing 22, after having inserted the test to analyze.

More in detail the Figs 5 and 6 respectively show the housing 22 in the open configuration, suitable to allow the insertion in it of the diagnostic test, and in the closed configuration after having inserted the diagnostic test.

Moreover the housing 22 is equipped with an internal lighting, not represented for sake of simplicity in the drawings, having the purpose of lighting the diagnostic or screening test S or MS, placed in the housing 22, so as to remove the influence of the environment lighting and therefore to enhance the sensitivity and the quality of the reading of the colored lines on the screening test to be analyzed, as described more in detail below.

The housing 22 is moreover suitable to be fixed to the rear fin 23 of the support 20 through a joint element 26, shown in Fig.8A, so as to make the configuration of the support 20 firm and stable, as shown in Figs 3, 5 and 6, and suitable to receive the computer device SP on the panel 21.

A further aspect of the present invention relates to the dedicated program or software, indicated with APP, which is implemented in the Smartphone or Tablet, and which is intended to be identified and proposed on the market with trade-mark DrugPrint^{®}, specifically to be applied in the field of Occupational Medicine by local Health Services or other structures to follow detoxing therapies, and also by law enforcement, to test drivers under the influence of substances of abuse.

For sake of clarity the flow chart in Fig.9 shows the operations which are controlled by and characterize this program APP, in the framework of the system of analysis 10 of the invention.

Specifically the program APP is able to manage, in a phase 31, the taking, through the incorporated camera of the Smartphone or Tablet, of one or more digital photographs of the diagnostic test S placed in the housing 22.

Then the APP, in a phase 32, acquires and analyzes the digital photograph, and subsequently visualizes, in a phase 33, the objective results R, derived from the analysis of the photograph, on the screen or display D of the Smartphone leant on the support 20.

It is finally possible, in a phase 34 and still under the control of the program APP, to provide a printed proof PS, using a printer PR, of the results R, as schematically indicated by an arrow f4 in Fig.2.

In summary, the procedure to utilize the system of analysis 10, object of the present invention, involves an initial phase in which the rapid screening test is carried out, whereby the appearing of the colored lines on the strip of the test is expected.

Afterwards the lighting in the housing 22 of the support 20 is switched on, and the test is inserted, for example a single strip test S, in such housing 22.

Furthermore the computer device SP, for example the Smartphone, is placed and leant on the upper panel 21 of the support 20, with the front side of the Smartphone, containing the camera lens, directly in contact with the panel 21 so that such camera is positioned aligned with the opening 21b formed on the same upper panel 21.

After that a photograph is taken with the Smartphone of the test S, placed inside the housing 22.

Therefore, advantageously, the test S is photographed in conditions that are not affected by external lighting.

Moreover in this phase the program or APP DrugPrint^{®} is activated, which will automatically proceed with acquisition and analysis of the photograph that has been taken.

More in detail, the photograph acquired in a digital format is processed by the APP DrugPrint^{®} to read the colored lines L1 and L2, if any, appearing in the window of the results for the diagnostic test S, to objectively detect the result R of the test.

The objective result R of such reading and analysis, obtained under the control of this APP, is then visualized on the display D of the Smartphone.

Finally it is possible to print the obtained objective result R, utilizing the dedicated printer PR, for example a wireless model, schematically represented in Fig.2, and subsequently carry out other tests and analyze the related results with the system 10 and the related APP or exit the application.

It is therefore clear that the analysis system 10 of the present invention, due to the parts which it is made of, including in particular the dedicated support 20 for supporting the Smartphone or tablet and the specific program or APP implemented in the same Smartphone or Tablet resting on the support 20, completely fulfills all the objectives which underlie the present invention.

More in detail, the system fulfils the compulsory requirements in application of the administrative rules (State/Regions Agreement of 2007) which in fact require an objective analysis and a related objective proof of printing, as those achieved by the system of the invention, of the results of the diagnostic tests that have been carried out.

The system, support and software objects of the present invention allow both reading of the results of the rapid tests and directly printing them by means of a printer, for example a wireless printer such as the one schematically drawn in Fig.2, or printing these data and results, once they have been downloaded on a personal computer, by means of any printer connected to it.

Moreover, advantageously, the physician or operator can create, by means of the software or APP DrugPrint^{®}, downloaded and implemented in the Smartphone or Tablet, a database of workers, or generally of patients or of tested subjects, which allows to save personal data, to carry out researches and repeatedly visualize the tests.

The database can moreover be downloaded on a personal computer, to have the same functionalities also in medical clinics or in the office.

Moreover the present invention meets the need and requirement, particularly important in the field of Occupational Medicine, that categories of workers which must be tested are continuously increasing in number, so that the Occupational Physicians have to analyze increasing amounts of samples, and sometimes in uncomfortable conditions.

In the same way the invention is directed to satisfy the demands of law enforcement, wherein drivers are tested in critical conditions, along the roads and often in the dark.

In response to such diverse needs, the present invention offers a system of analysis for diagnostic tests, based on the use of a Smartphone or Tablet or a similar computer device, which is quick and practical and which is able to automatically analyze the results of such tests, also offering a support for the Smartphone or Tablet which is portable, light and not bulky, usable in various conditions.

## Claims

1. System (10) for the analysis of the results of quick diagnostic tests (S, MS) using a computer device (SP), like in particular a Smartphone (SP) or a Tablet or a similar device, comprising:
- a support (20) on which it is possible to place the computer device (SP), that is the Smartphone or Tablet, said support in turn comprising a housing (22) suitable for receiving and accommodating the quick diagnostic tests (S, MS), already performed and to be analyzed, and
- a specific and dedicated program or software (APP) implemented in the computer device (SP), that is the Smartphone or Tablet, to be placed on said support (20);
wherein said dedicated program (APP) is designed to control said computer device (SP) to analyze and process one or more photographs that are taken, via the same computer device (SP) supported on said support (20), on the quick diagnostic tests (S, MS) arranged in the housing (22) of the support (20), and to display on the screen of the computer device (SP) the results (R), obtained by analyzing these photographs, of the quick diagnostic tests (S, MS).

2. System (10) according to claim 1, wherein said dedicated program (APP) is also designed to produce an immediate printing (PS) of the results (R) of the quick diagnostic tests by using a printer of the wireless type.

3. A system according to claim 1 or 2, wherein said dedicated program or software (APP) is also designed to create a database containing the data of the persons that are subjected to the quick diagnostic tests and the results of the quick diagnostic tests that are executed on these persons.

4. System according to any one of the preceding claims, wherein said dedicated program (APP) allows to download all the data concerning the results of quick tests on another computer device and print such data with any printer connected to it.

5. Support (20) for a computer device (SP), like in particular a Smartphone (SP) or a Tablet or a similar device, for the analysis of the results of quick diagnostic tests (S, MS), including:
- an upper part comprising a top panel (21) on which it is possible to place the computer device (SP), that is the Smartphone or the tablet; and
- a lower part comprising a housing (22), removable, adapted to receive and accommodate the quick diagnostic tests (S. MS), already performed and to be analyzed.

6. Support (20) according to claim 5, wherein said top panel (21) has an opening (21b) to allow images of the quick diagnostic tests (S, MS) arranged in the housing (22) to be captured and photographed, via the computer device once supported on the top panel.

7. Support according to claim 5, wherein said support further comprises a closable rear panel (23).

8. Support (20) according to claim 5, wherein said housing (22) is provided at the inside of a light source suitable for illuminating the quick diagnostic tests (S, MS) to be analyzed.

9. Support (20) according to claim 5, wherein the respective top panel (21) has a plurality of openings (21a) provided for lighten the same support.

10. Dedicated program (APP) implementable in a computer device, like a Smartphone (SP) or a Tablet or a similar device, as a part of the system, according to claim 1, for the analysis of the results (R) of quick diagnostic tests (S, MS), in particular directed to verify the possible abuse of drugs and alcohol from the persons on which said tests are executed.
